# EUROPÄISCHE PATENTSCHRIFT

(11) **EP 3 795 848 B1**
(45) Veröffentlichungstag und Bekanntmachung des Hinweises auf die Patenterteilung: **27.12.2023**
(21) Anmeldenummer: 20191786.1
(22) Anmeldetag: 19.08.2020
(51) Int. Cl.: F16D 1/033, F16D 1/108, B23B 29/04, B23B 31/11

(54) **KUPPLUNGSANORDNUNG, KUPPLUNGSELEMENT UND VERFAHREN ZUM KUPPELN ZWEIER KUPPLUNGSELEMENTE**
COUPLING ARRANGEMENT, COUPLING ELEMENT AND METHOD FOR COUPLING TWO COUPLING ELEMENTS
AGENCEMENT D'ACCOUPLEMENT, ÉLÉMENT D'ACCOUPLEMENT ET PROCÉDÉ D'ACCOUPLEMENT DE DEUX ÉLÉMENTS D'ACCOUPLEMENT

(30) Priorität: 20.09.2019 DE 102019125438
(43) Veröffentlichungstag der Anmeldung: 24.03.2021
(73) Patentinhaber: Schunk GmbH & Co. KG Spann- und Greiftechnik, 74348 Lauffen am Neckar (DE)
(72) Erfinder: Retzbach, Thomas, 74357 Bönnigheim (DE)
(74) Vertreter: Paul & Albrecht Patentanwälte PartG mbB

(56) Entgegenhaltungen:
- WO-A1-94/12801
- DE-A1- 19 829 960
- DE-A1-102010 052 646
- DE-B3-102011 014 357
- JP-A- S4 845 738
- US-A- 2 233 950
- US-A- 2 482 415
- US-A- 2 683 362
- US-A- 3 088 340
- US-A- 3 091 133
- US-A- 4 789 377

## Beschreibung

Die vorliegende Erfindung betrifft eine Kupplungsanordnung mit zwei Kupplungselementen, welche jeweils eine Längsachse definieren, und Spannmitteln zum axialen Verspannen der Kupplungselemente gegeneinander, wobei an zueinander weisenden Stirnflächen der Kupplungselemente jeweils eine Mehrzahl von Formschlusselementen vorgesehen sind, welche von der jeweiligen Stirnfläche vorragen und jeweils ringförmig entlang eines Teilkreises um die Längsachse des jeweiligen Kupplungselements angeordnet sind, so dass die Formschlusselemente eines Kupplungselements in Umfangsrichtung zwischen den Formschlusselementen des anderen Kupplungselements in Eingriff bringbar sind, um die beiden Kupplungselemente koaxial drehfest miteinander zu kuppeln, wobei die Formschlusselemente eine einem Teilabschnitt einer Kugel entsprechende Kontur aufweisen.

Des Weiteren betrifft die Erfindung ein Verfahren zum drehfesten Kuppeln zweier Kupplungselemente.

Kupplungsanordnungen zum drehfesten Verbinden zweier Elemente werden in vielen industriellen Bereichen eingesetzt. Beispielsweise werden zur Verarbeitung eines Werkstücks in einer Werkzeugmaschine dafür erforderliche Werkzeuge, u.a. Fräs- oder Bohrwerkzeuge, in Werkzeughalter eingesetzt und in diesen fixiert. Diese Werkzeughalter werden dann drehfest mit einer antreibbaren Spindel einer Werkzeugmaschine gekuppelt. Ein anderes Anwendungsgebiet von derartigen Werkzeughaltern sind Drehmeißelhalter, die an Werkzeugmaschinen, insbesondere an Drehmaschinen zum Einsatz kommen und Aufnahmemittel zur Aufnahme einer Schneidplatte, insbesondere einer Wendeschneidplatte aufweisen. Derartige Drehmeißelhalter werden häufig an einem Revolver einer Drehmaschine drehfest angebracht.

Für derartige Aufgaben ist es in der Regel erforderlich, dass die beiden zu kuppelnden Elemente exakt und spielfrei zueinander positioniert werden und gleichzeitig die Übertragung von hohen Drehmomenten möglich ist. Gleichzeitig ist eine schnelle Auswechselbarkeit von Komponenten und somit ein schnelles Kuppeln und Entkuppeln gewünscht, um die Ausfallzeiten beispielsweise bei einer Umkonfiguration einer Maschine gering zu halten.

Beispielsweise sind Kupplungsanordnungen basierend auf einer sogenannten Hirth-Verzahnung vorbekannt. Derartige Kupplungsanordnungen umfassen zwei Kupplungselemente, die an zueinander weisenden Stirnflächen jeweils eine Vielzahl von Formschlusselementen aufweisen. Konkret sind diese Formschlusselemente als Zähne mit einem V-förmigen Querschnitt ausgebildet, welche sich über einen ringförmigen Abschnitt um eine Längsachse des jeweiligen Kupplungselements erstrecken. Die Zähne verlaufen dabei in radialer Richtung und laufen nach innen zusammen, so dass sich deren Abstand radial nach innen verringert. Durch das axiale Verspannen der beiden Kupplungselemente gegeneinander mittels geeigneter Spannmittel wird erreicht, dass die beiden Kupplungselemente koaxial drehfest miteinander gekuppelt werden können. Die Zähne des einen Kupplungselements sind dabei in Eingriff zwischen den Zähnen des anderen Kupplungselements. Durch die Orientierung der Zähne in radialer Richtung ist gleichzeitig eine Zentrierung der beiden Kupplungselemente zueinander sichergestellt. Die Drehmomentübertragung erfolgt dabei über die aneinander anliegenden Zahnflanken.

Wenngleich sich eine derartige Kupplungsanordnung in der Praxis grundsätzlich bewährt hat, so wird zu Teilen als nachteilig angesehen, dass die Erstellung der Formschlusselemente an den Kupplungselementen mit einem hohen fertigungstechnischen Aufwand verbunden ist. Ferner ist bei Verschmutzungen ein definiertes und spielfreies in Eingriff Bringen der Formschlusselemente eines Kupplungselements zwischen den korrespondierenden Formschlusselementen des anderen Kupplungselements nicht ohne weiteres möglich.

Die DE 198 29 960 A1 offenbart eine Drehmomentbegrenzungseinrichtung mit zwei Übertragungselementen, an denen jeweils eine Mehrzahl von Formschlusselementen vorgesehen sind. Die Übertragungselemente werden durch Tellerfedern gegeneinander gedrückt, so dass die Formschlusselemente miteinander in Eingriff gebracht werden. Wirkt ein zu großes Drehmoment auf die beiden Übertragungselemente, so bewegen sich die Übertragungselemente gegen die Vorspannkraft der Tellerfedern auseinander, so dass die Formschlusselemente außer Eingriff kommen und durchrutschen können.

Die US 3,088,340 offenbart eine Indexiervorrichtung, welche zwei relativ zueinander verstellbare Scheiben, an denen kugelförmige Formschlusselemente ausgebildet sind, umfasst. Die Scheiben sind relativ zueinander in diskreten Schritten verstellbar. Dadurch kann ein Relativwinkel der Scheiben zueinander eingestellt werden.

Eine weitere Drehmomentbegrenzungseinrichtung ist aus der DE 10 2011 014 357 B3 vorbekannt.

Aufgabe der vorliegenden Erfindung ist es daher, eine alternative Kupplungsanordnung und ein Verfahren zum drehfesten Kuppeln zweier Kupplungselemente zu schaffen.

Diese Aufgabe ist bei einer Kupplungsanordnung der eingangs genannten Art durch die Merkmale des Anspruchs 1 gelöst.

Des Weiteren ist die der Erfindung zugrundeliegende Aufgabe gelöst bei einem Verfahren, welches die folgenden Schritte umfasst:
Bereitstellen einer Kupplungsanordnung gemäß der vorliegenden Erfindung;
Positionieren der beiden Kupplungselemente derart, dass die beiden Stirnflächen, an welchen die Formschlusselemente vorgesehen sind, zueinander gerichtet sind;
in Eingriff Bringen der an den beiden Kupplungselementen vorgesehenen Formschlusselemente miteinander;
axiales Verspannen der beiden Kupplungselemente gegeneinander.

Der Erfindung liegt die grundsätzliche Überlegung zugrunde, die Formschlusselemente beider Kupplungselemente derart auszugestalten, dass die Formschlusselemente miteinander lediglich über eine im Wesentlichen punktförmige Anlage in Eingriff stehen. Dies wird durch die kugelförmige Kontur der Formschlusselemente erreicht. Aneinander anliegende Kugeln sind, wie dies beispielsweise aus Rillenkugellagern bekannt ist, in der Lage, hohe punktförmige Lasten zu übertragen, ohne dass es zu einer plastischen Verformung kommt. Die lediglich punktförmige Anlage der Formschlusselemente aneinander führt dazu, dass offene Zwischenräume zwischen den beiden Kupplungselementen vorhanden sind, in welche mögliche Verunreinigungen ausweichen können.

Dadurch, dass die Formschlusselemente beider Kupplungselemente über jeweils einen Teilkreis verteilt angeordnet sind, steht eine Mehrzahl von Formschlusselementen eines Kupplungselements jederzeit in Eingriff zwischen den Formschlusselementen des anderen Kupplungselements und positioniert somit die beiden Kupplungselemente relativ zueinander eindeutig und spielfrei. Aufgrund der verschiedenen Winkellagen der Formschlusselemente entlang des Teilkreises können die beiden Kupplungselemente bei in Eingriff befindlichen Formschlusselementen nicht mehr radial zueinander verschoben werden. Gleichzeitig werden die Kupplungselemente zueinander zentriert, so dass deren Längsachsen im gekuppelten Zustand koaxial zueinander verlaufen. Ferner liegen Formschlusselemente eines Kupplungselements jeweils an zwei zueinander benachbarten Formschlusselementen des anderen Kupplungselements an, so dass die Kupplungselemente bei in Eingriff befindlichen Formschlusselementen auch axial zueinander definiert positioniert sind.

Durch die entlang des Teilkreises umlaufend angeordneten in Eingriff stehenden Formschlusselemente kann ferner eine gleichförmige Übertragung von Drehmomenten stets über mehrere Formschlusselemente gewährleistet werden. Ein axiales Verspannen der beiden Kupplungselemente gegeneinander verhindert, dass sich die Kupplungselemente axial voneinander lösen und somit durchdrehen können. Dadurch wird eine drehfeste Kupplung der beiden Kupplungselemente zueinander realisiert.

Bevorzugt ist vorgesehen, dass eines der beiden Kupplungselemente als Werkzeughalter ausgebildet ist. Werkzeuge werden bei der mechanischen Bearbeitung von Werkstücken hohen Kräften und Drehmomenten ausgesetzt, sodass die erfindungsgemäße Kupplungsanordnung eine effiziente und schnelle Weise bildet, um Werkzeughalter an einer Maschine trotz möglicherweise auftretender Verschmutzung drehfest und spielfrei anzubringen.

Dabei kann das als Werkzeughalter ausgebildete Kupplungselement in dem Endbereich, welcher der mit den Formschlusselementen versehenen Stirnfläche gegenüberliegt, eine Aufnahme für ein Werkzeug, insbesondere für einen Werkzeugschaft aufweisen. Eine solche Aufnahme kann dabei als Aufnahmebohrung ausgebildet sein, in welcher ein eingesetzter Werkzeugschaft kraft- und/oder formschlüssig fixiert wird. Beispielsweise kann der Werkzeughalter als Hydrodehnspannfutter ausgebildet sein. Dabei ist die Aufnahme von einer ringförmig umlaufenden Druckkammer oder mehreren über den Umfang verteilten Druckkammerabschnitten umgeben, wobei zwischen der Aufnahme und der Druckkammer eine dünne Wandung ausgebildet ist, welche durch eine Druckerhöhung in der Druckkammer radial nach innen verformbar ist, um ein in die Aufnahme eingesetztes Werkzeug kraftschlüssig zu fixieren. Alternativ kann der Werkzeughalter als Warmschrumpffutter ausgebildet sein. In diesem Fall ist der Durchmesser der Aufnahmebohrung geringfügig kleiner als der Durchmesser des einzusetzenden Werkzeugschafts. Wird der Werkzeughalter erwärmt, so vergrößert sich der Durchmesser der Aufnahmebohrung und der Werkzeugschaft kann ohne nennenswerten Kraftaufwand in die Aufnahme eingesetzt werden. Das anschließende Abkühlen führt dazu, dass der Werkzeugschaft kraftschlüssig in der Aufnahme gespannt wird.

Das als Werkzeughalter ausgebildete Kupplungselement kann alternativ Aufnahmemittel für ein Werkzeug, insbesondere für eine Schneidplatte, bevorzugt für eine Wendeschneidplatte aufweisen. Schneidplatten werden beispielsweise dafür verwendet, in Drehmaschinen mit einem stehenden Werkzeug und einem rotierenden Werkstück Oberflächenbearbeitungen vorzunehmen, so dass erhebliche Kräfte auf die entsprechende Schneidplatte wirken. Die erfindungsgemäße Kupplungsanordnung stellt eine einfache Möglichkeit dar, solche Schneidplatten- oder auch Drehmeißelhalter schnell auszuwechseln und gleichzeitig hohe Kräfte und Drehmomente spielfrei übertragen zu können.

In weiterer Ausgestaltung der vorliegenden Erfindung sind die Formschlusselemente jedes Kupplungselements gleichmäßig in Umfangsrichtung entlang des jeweiligen Teilkreises verteilt angeordnet. Eine gleichmäßige Verteilung der Formschlusselemente in Umfangsrichtung bewirkt eine zu der jeweiligen Längsachse symmetrische Drehmomentübertragung.

Bevorzugt sind die zwischen den Formschlusselementen mindestens eines Kupplungselements gebildeten Lücken kleiner als die Bereiche, welche durch die Formschlusselemente ausgefüllt werden. Auf diese Weise kann sichergestellt werden, dass jedes Formschlusselement eines Kupplungselements an jeweils zwei benachbarten Formschlusselementen des anderen Kupplungselements anliegt, so dass eine spielfreie Kupplung der beiden Kupplungselemente zueinander realisiert wird.

Die Teilkreise der beiden Kupplungselemente können den gleichen Durchmesser aufweisen. Dies hat zur Folge, dass die Formschlusselemente derart miteinander in Eingriff stehen, dass die in den Kontaktpunkten auftretenden Kräfte lediglich eine Komponente tangential zum Teilkreis und eine Komponente in axialer Richtung besitzen.

Alternativ können die Teilkreise der beiden Kupplungselemente unterschiedliche Durchmesser aufweisen. Teilkreise mit unterschiedlichen Durchmessern haben zur Folge, dass die über die punktförmige Anlage der Formschlusselemente aneinander übertragene Kraft eine in Umfangsrichtung verlaufende eine axiale und eine radiale Kraftkomponente aufweist.

In weiterer Ausgestaltung dieser Ausführungsform weist wenigstens ein Kupplungselement mindestens 6, bevorzugt mindestens 10 und höchstens 28, bevorzugt höchstens 20 Formschlusselemente auf. Eine derartige Zahl von in Umfangsrichtung verteilten Formschlusselementen hat sich als vorteilhaft im Hinblick auf eine gleichmäßige Drehmomentübertragung und gleichzeitig eine präzise Positionierung der Kupplungselemente zueinander herausgestellt. Bei einer entsprechenden hohen Anzahl von Formschlusselementen ist selbst dann noch eine Übertragung hoher Drehmomente möglich, wenn einzelne Formschlusselemente beschädigt sind oder fehlen und somit nicht in Eingriff kommen. Die Ausfallsicherheit der Kupplungsanordnung wird dadurch erhöht.

Bevorzugt sind an beiden Kupplungselementen jeweils die gleiche Anzahl an Formschlusselementen vorgesehen. Eine derartige Ausgestaltung bewirkt, dass jedes Formschlusselement zur Drehmomentübertragung beiträgt und eine der Anzahl der Formschlusselemente entsprechende Anzahl von relativen Drehlagen der beiden Kupplungselemente relativ zueinander um die Längsachse möglich ist. Prinzipiell ist es auch denkbar, eine unterschiedliche Anzahl von Formschlusselementen an beiden Kupplungselementen vorzusehen.

Ferner kann die kugelförmige Kontur der Formschlusselemente der beiden Kupplungselemente den gleichen Durchmesser aufweisen. Somit ist vorgesehen, dass beide Kupplungselemente über mit einer identischen Kontur versehene Formschlusselemente verfügen. Dadurch wird eine gleichmäßige Krafteinleitung realisiert. Des Weiteren führen Formschlusselemente, deren Kontur den gleichen Durchmesser aufweist, dazu, dass eine optimale Krafteinleitung und somit eine optimale Ausnutzung des Materials bei der Drehmomentübertragung realisiert wird. Prinzipiell ist es auch denkbar, dass die kugelförmige Kontur der Formschlusselemente der beiden Kupplungselemente unterschiedliche Durchmesser aufweist. Diesem Fall sind bei den beiden Kupplungselementen die Lücken zwischen zwei benachbarten Formschlusselementen unterschiedlich groß.

In weiterer Ausgestaltung der Erfindung sind mindestens ein Kupplungselement und die diesem zugeordneten Formschlusselemente einteilig ausgebildet. Eine einteilige Ausgestaltung bietet dabei den Vorteil, dass eine aufwendige Montage bei der Herstellung des betreffenden Kupplungselements vermieden wird. Hingegen gestaltet sich die Fertigung derartiger Formschlusselemente mit einer kugelförmigen Kontur als schwierig. Beispielsweise kann die Fertigung mittels eines generativen Fertigungsverfahrens, insbesondere mittels des selektiven Laserschmelzens durchgeführt werden. Die Wahl eines generativen Fertigungsverfahrens erlaubt es, verschiedene Bereiche in einem Werkstück mit unterschiedlichen Werkstoffzusammensetzungen und/oder -eigenschaften zu versehen. Somit könnten vorliegend die Formschlusselemente aus einem härteren Werkstoff bestehen als andere Bereiche des Kupplungselements.

Ferner können die Formschlusselemente von mindestens einem Kupplungselement, bevorzugt von beiden Kupplungselementen, durch Kugeln gebildet werden, welche in entsprechenden, in der Stirnfläche ausgebildeten Ausnehmungen angeordnet sind und partiell von der Stirnfläche vorragen, wobei bevorzugt Sicherungsmittel an dem jeweiligen Kupplungselement vorgesehen sind, um ein Herausfallen der Kugeln aus den Ausnehmungen zu vermeiden. Die Verwendung von als separaten Bauteilen ausgebildeten Kugeln ermöglicht eine einfache Fertigung der Kupplungselemente, da lediglich Aussparungen, welche bevorzugt im Wesentlichen zylindrisch ausgebildet sind, für die Kugeln in die jeweilige Stirnfläche eingebracht werden müssen. Die Kugeln können dabei als separate Bauteile hergestellt werden und nachträglich auf einfache Weise in die entsprechenden Ausnehmungen eingesetzt werden. Des Weiteren bietet die Ausgestaltung der Kupplungselemente und der Kugeln als separate Bauteile den Vorteil, dass die Kugeln aus einem härteren Werkstoff als das Kupplungselement bestehen können und somit eine höhere Flächenpressung ertragen können. Durch entsprechende Sicherungsmittel kann vermieden werden, dass die Kugel unbeabsichtigt aus den Ausnehmungen herausfallen. Beispielsweise können zur Stirnseite hin die Ausnehmungen verjüngt ausgebildet sein. Derartige Verjüngungen können hergestellt werden, indem nach dem Einsetzen der Kugeln ein die Ausnehmungen umgebender Bund oder Grat umgebogen wird.

In bevorzugter Ausgestaltung der Erfindung ist vorgesehen, dass die Kugeln um mindestens 10 %, bevorzugt um mindestens 20 %, und höchstens um 40 %, bevorzugt höchstens um 30 % ihres Durchmessers von der Stirnfläche vorragen. Durch ein derartiges Maß kann eine saubere Anlage der Formschlusselemente bei einer günstigen Position der punktförmigen Auflage auf der Kugeloberfläche und somit einer günstigen Wirkrichtung der von den Formschlusselementen übertragenen, bzw. auf diese wirkende Kräfte gewährleistet werden.

Bevorzugt bestehen die Kugeln aus einem metallischen Werkstoff, insbesondere einem Wälzlagerstahl oder einem Hartmetall, oder aus einem keramischen Werkstoff oder aus Rubin oder Saphir. Bei einem Wälzlagerstahl handelt es sich um einen chromhaltigen Stahl mit einem relativ hohen Kohlenstoffanteil im Bereich von 0,8 bis 1,1 %, der mit einer entsprechenden Härte versehen werden kann. Wälzlagerstähle können ferner als härte- und festigkeitssteigernde Legierungselemente Molybdän und Mangan enthalten. Somit sind die Kugeln in der Lage, hohe punktförmig auf sie einwirkende Lasten ohne plastische Verformung zu ertragen. Bei keramischen Werkstoffen bzw. Rubin oder Saphir handelt es sich ebenfalls um harte Werkstoffe, welche zur Aufnahme hoher punktförmig wirkender Lasten prinzipiell gut geeignet sind.

In weiterer Ausgestaltung der Erfindung kann mindestens ein Kupplungselement eine zentrale Durchgangsbohrung aufweisen. Somit kann neben der rein mechanischen Kupplung der beiden Kupplungselemente miteinander zusätzlich die Kupplung einer Fluidverbindung, beispielsweise einer Kühlmittelleitung, realisiert werden.

Erfindungsgemäß weist ein Kupplungselement einen sich in Längsrichtung erstreckenden Vorsprung auf, welcher in eine korrespondierende Öffnung, insbesondere eine Bohrung des anderen Kupplungselementes einbringbar ist. Durch einen solchen Vorsprung wird eine zusätzliche Führung der beiden Kupplungselemente zueinander realisiert.

Bei einer weiteren Ausgestaltung der Erfindung sind ferner Dichtmittel vorgesehen, um den Vorsprung des einen Kupplungselements gegen die korrespondierende Öffnung des anderen Kupplungselements abzudichten. Konkret können die Dichtmittel einen Dichtring umfassen, welcher in einer ringförmig umlaufenden Nut eines Kupplungselements angeordnet ist. Durch derartige Dichtmittel, insbesondere einen ringförmig umlaufenden Dichtring, kann der Vorsprung des einen Kupplungselements gegenüber der korrespondierenden Öffnung des anderen Kupplungselements fluiddicht abgedichtet werden.

Gemäß der Erfindung ist in dem Vorsprung eine sich quer zur Längsrichtung erstreckende Nut, insbesondere mit einem V-förmigen Querschnitt, ausgebildet und weist das andere Kupplungselement eine schräg zur Längsachse verlaufende Gewindebohrung für eine Spannschraube auf, wobei die Gewindebohrung und die Nut derart ausgebildet sind, dass eine in die Gewindebohrung eingeschraubte Spannschraube mit einer Nutwandung in Eingriff bringbar ist, um die beiden Kupplungsteile axial gegeneinander zu verspannen. Diese erfindungsgemäßen Formgebung liegt die Überlegung zugrunde, in dem Vorsprung eine Schrägfläche anzuordnen, welche vorliegend von einer Nutwandung gebildet wird, gegen welche eine Spannschraube drückt, um die beiden Kupplungselemente axial gegeneinander zu verspannen. Durch die Schrägfläche wird erreicht, dass die Kraft, welche die Spannschraube auf die Nutwandung ausübt, eine Komponente in axialer Richtung besitzt, so dass auf die Formschlusselemente der beiden Kupplungselemente jeweils eine Axialkraft wirkt und so ein Durchdrehen der beiden Kupplungselemente relativ zueinander verhindert wird.

Bevorzugt ist die Gewindebohrung in einem Winkel von mindestens 20° und höchstens 40°, bevorzugt von genau 30° zur Längsachse des betreffenden Kupplungselements geneigt. Ein derartiger Winkel führt im Hinblick auf die Wirkrichtung der von der Spannschraube auf die Nutwandung ausgeübten Kraft zu einer relativ hohen axialen Komponente, wodurch ein effizientes Verspannen der beiden Kupplungselemente axial gegeneinander erreicht wird.

Für die weitere Ausgestaltung der Erfindung wird auf die Unteransprüche, sowie auf das nachfolgend beschriebene Ausführungsbeispiel unter Bezugnahme auf die Zeichnung verwiesen.

In der Zeichnung zeigen:
- Figur 1: eine erste Ausführungsform einer Kupplungsanordnung nicht gemäß der vorliegenden Erfindung in einer Längsschnittansicht;
- Figur 2: eine zweite Ausführungsform einer Kupplungsanordnung nicht gemäß der vorliegenden Erfindung in einer Längsschnittansicht;
- Figur 3: ein Kupplungselement in einer dritten Ausführungsform einer Kupplungsanordnung nicht gemäß der vorliegenden Erfindung in perspektivischer Darstellung;
- Figur 4: eine vierte Ausführungsform einer Kupplungsanordnung gemäß der vorliegenden Erfindung in einer Längsschnittansicht;
- Figur 5: ein Kupplungselement der Kupplungsanordnung aus Figur 4 in perspektivischer Ansicht;
- Figur 6: das andere Kupplungselement der Kupplungsanordnung aus Figur 4 in perspektivischer Ansicht;
- Figur 7: das Kupplungselement aus Figur 6 in einer anderen perspektivischen Ansicht.

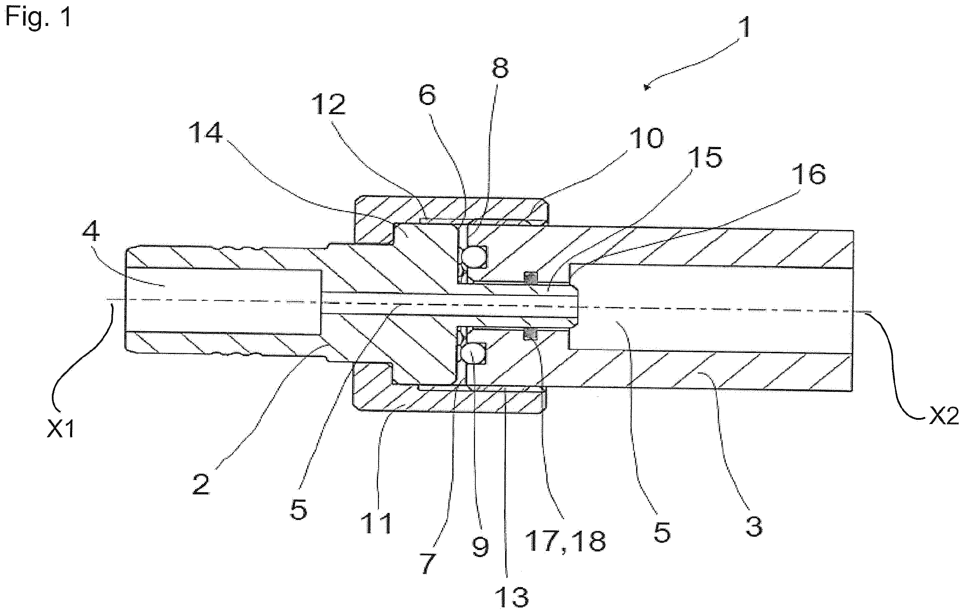

Die Figur 1 zeigt eine nicht erfindungsgemäße Kupplungsanordnung 1, welche zwei Kupplungselemente 2, 3 aufweist, die jeweils eine Längsachse X1, X2 definieren und koaxial drehfest miteinander gekuppelt sind.

Das in der Figur 1 links angeordnete Kupplungselement 2 ist dabei als Werkzeughalter ausgebildet und besitzt in seinem nach links weisenden Endbereich eine Aufnahme 4 für ein Werkzeug, insbesondere für einen Werkzeugschaft. An die Aufnahme 4 schließt sich eine zentrale Durchgangsbohrung 5 an, welche das Kupplungselement 2 vollständig in axialer Richtung durchsetzt. Das rechte Kupplungselement 3 ist als Verlängerung einer Spindelwelle einer Werkzeugmaschine ausgebildet und besitzt ebenfalls eine zentrale Durchgangsbohrung 5.

An zwei zueinander weisenden Stirnflächen 6, 7 der Kupplungselemente 2, 3 sind jeweils zwölf Formschlusselemente 8 vorgesehen, welche von der jeweiligen Stirnfläche 6, 7 vorragen. Diese werden vorliegend durch Kugeln 9 gleichen Durchmessers gebildet, welche in entsprechenden, in der jeweiligen Stirnfläche 6, 7 ausgebildeten Ausnehmungen 10 angeordnet sind und um etwa 25% ihres Durchmessers von der jeweiligen Stirnfläche 6, 7 vorragen. Die Kugeln 9 bestehen vorliegend aus einem Wälzlagerstahl und sind durch entsprechende Sicherungsmittel, vorliegend eine Verjüngung der Ausnehmungen 10, gegen ein Herausfallen aus den Ausnehmungen 10 gesichert.

Die Ausnehmungen 10 und die Kugeln 9 sind jeweils ringförmig entlang von Teilkreisen mit dem gleichen Durchmesser um die Längsachse X1, X2 des jeweiligen Kupplungselements 2, 3 gleichmäßig verteilt angeordnet. Dabei sind die zwischen den Kugeln 9 gebildeten Lücken kleiner als die Bereiche, welche durch die Kugeln 9 ausgefüllt werden.

In dem in der Figur 1 dargestellten Zustand stehen die Kugeln 9 des Kupplungselements 2 in Umfangsrichtung zwischen den Kugeln 9 des Kupplungselements 3 in Eingriff, um die beiden Kupplungselemente 2, 3 drehfest miteinander zu kuppeln. Die Anordnung ist dabei so getroffen, dass die Kugeln 9 eines Kupplungselements punktförmig an jeweils zwei benachbarten Kugeln 9 des anderen Kupplungselements anliegen.

Die Kupplungsanordnung 1 weist ferner Spannmittel zum axialen Verspannen der Kupplungselemente 2, 3 gegeneinander auf. Vorliegend umfassen diese Spannmittel eine Überwurfmutter 11 mit einem Innengewinde 12, welche auf ein entsprechendes Gegengewinde 13 des Kupplungselements 3 aufgeschraubt ist. An dem Kupplungselement 2 ist ein Absatz 14 ausgebildet, an welchem die Überwurfmutter 11 anliegt, um die Kupplungselemente 2, 3 axial gegeneinander zu verspannen.

Zum Durchleiten eines Fluids, beispielsweise eines Kühlschmiermittels, weist das Kupplungselement 2 einen sich in Längsrichtung X1 erstreckenden Vorsprung 15 auf, welcher in eine korrespondierende Bohrung 16 des Kupplungselements 3 eingebracht ist. Dabei sind Dichtmittel vorgesehen, um den Vorsprung 15 des Kupplungselements 2 gegen die korrespondierende Bohrung 16 des Kupplungselements 3 abzudichten. Die Dichtmittel umfassen einen Dichtring 17, welcher in einer ringförmig umlaufenden Nut in der Bohrung 16 des Kupplungselements 3 angeordnet ist.

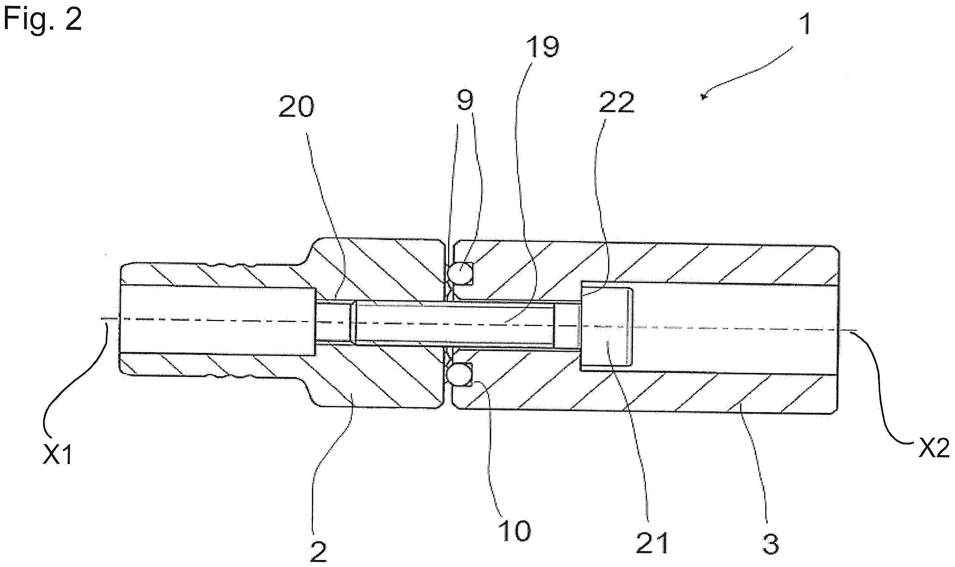

In der Figur 2 ist eine weitere Ausführungsform einer nicht erfindungsgemäßen Kupplungsanordnung 1 dargestellt. Diese besitzt zwei Kupplungselemente 2, 3, welche über entsprechende Formschlusselemente 4, die in gleicher Weise wie bei der in der Figur 1 dargestellten Ausführungsform ausgestaltet sind, drehfest miteinander gekuppelt sind. Von der in der Figur 1 dargestellten Ausführungsform unterscheidet sich die Kupplungsanordnung 1 der Figur 2 dadurch, dass die Spannmittel keine Überwurfmutter 11 aufweisen, sondern eine zentrale Spannschraube 19, mittels derer die beiden Kupplungselemente 2, 3 miteinander verschraubt sind.

Konkret ist die Spannschraube 19 in eine im Kupplungselement 2 ausgebildete Gewindebohrung 20 eingeschraubt. Der Schraubenkopf 21 der Spannschraube 19, welche vorliegend als Innensechskantschraube ausgebildet ist, liegt an einer entsprechenden Anlagefläche 22 des Kupplungselements 3 an.

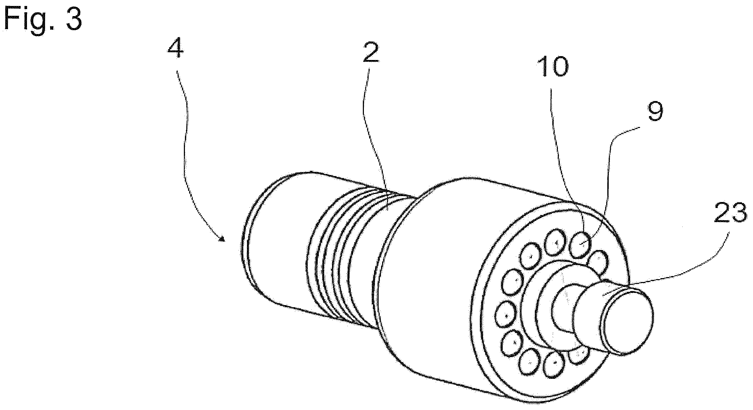

In der Figur 3 ist ein als Werkzeughalter ausgebildetes, nicht erfindungsgemäßes Kupplungselement 2 dargestellt. Dieses besitzt in gleicher Weise wie die in den Figuren 1 und 2 dargestellten Kupplungselemente insgesamt zwölf entlang eines Teilkreises um eine Längsachse X1 des Kupplungselements 2 angeordnete und als Kugeln 9 ausgebildete Formschlusselemente 8, welche von einer Stirnfläche 6 vorragen.

Von der Stirnfläche 3 ragt ein Anzugzapfen 23 vor, der zum axialen Verspannen des Kupplungselements 2 gegen ein korrespondierendes Kupplungselement vorgesehen ist. Dieser Anzugzapfen 23 ist vorliegend ähnlich eines Steilkegels nach ISO 7388-1 ausgebildet.

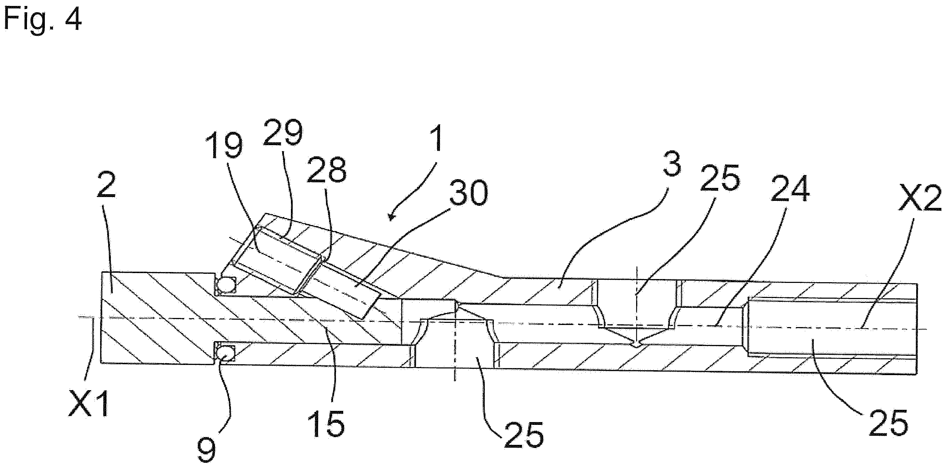

In den Figuren 4 bis 7 ist eine erfindungsgemäße, als Drehmeißelhalter mit einem Wechselkopf ausgebildete Kupplungsanordnung 1 dargestellt. Das in der Figur 4 links dargestellte Kupplungselement 2 ist dabei als Wechselkopf zur Aufnahme eines Werkzeugs, insbesondere einer Schneidplatte, ausgebildet. Das rechts dargestellte Kupplungselement 3 besitzt eine zentrale Durchgangsbohrung 24, in welche mehrere sich senkrecht zur Längsachse X2 und axial erstreckende Gewindebohrungen 25, welche als Kühlmittelanschluss dienen, münden.

In gleicher Weise wie bei den Kupplungsanordnungen 1 aus den Figuren 1 und 2 weisen die beiden Kupplungselemente 2, 3 an zueinander weisenden Stirnflächen 6, 7 eine Mehrzahl, vorliegend jeweils vierzehn, Formschlusselemente 8 auf, welche von der jeweiligen Stirnfläche 6, 7 vorragen und ringförmig entlang eines Teilkreises um die Längsachse X1, X2 des jeweiligen Kupplungselements 2, 3 angeordnet sind. Wie bei den zuvor dargestellten Ausführungsformen werden die Formschlusselemente 8 durch Kugeln 9 gebildet, welche ebenfalls aus einem Wälzlagerstahl bestehen und in entsprechenden, in den jeweiligen Stirnflächen 6, 7 ausgebildeten Ausnehmungen 10 angeordnet sind.

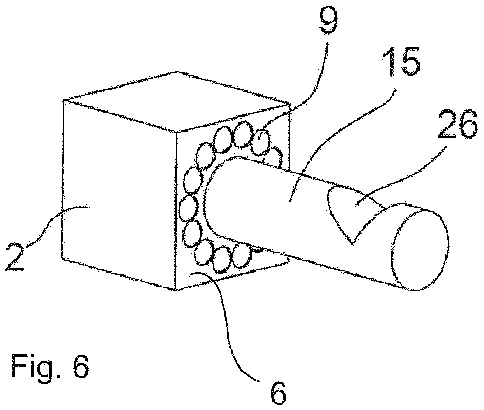

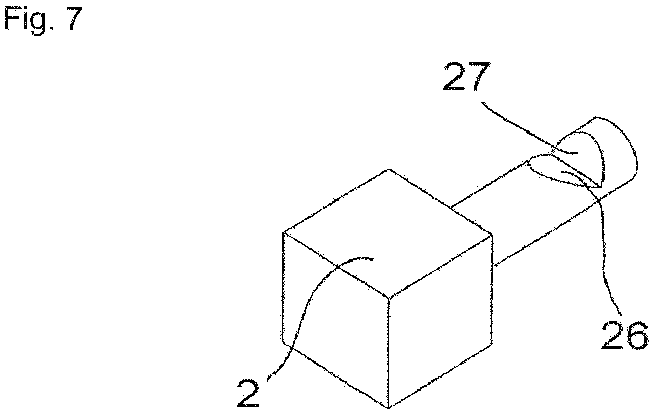

Das Kupplungselement 2 besitzt einen Vorsprung 15, welcher in eine korrespondierende Bohrung 16 des Kupplungselements 3 einbringbar ist bzw. - wie in Figur 4 dargestellt - eingebracht ist. In dem Vorsprung 15 des Kupplungselements 2 ist - wie in den Figuren 6 und 7 zu erkennen ist - eine sich quer zur Längsrichtung X1 erstreckende Nut 26 ausgebildet. Diese weist einen V-förmigen Querschnitt auf, wobei die in der Figur 4 rechts dargestellte Nutwandung 27 in einem Winkel von 30° zur Stirnfläche 6 geneigt orientiert ist.

Das Kupplungselement 3 weist eine ebenfalls um einen Winkel von 30° schräg zur Längsachse verlaufende Gewindebohrung 28 für eine Spannschraube 19 auf. Die als Innensechskantschraube ausgebildete Spannschraube 19 weist einen bezogen auf das Kupplungselement 3 äußeren Gewindeabschnitt 29 und einen innerhalb des Kupplungselements 3 liegenden Schaft 30 auf, wobei die nach innen in das Kupplungselement 3 gerichtete Stirnfläche des Schafts 30 gegen die Nutwandung 27 drückt, um die Kupplungselemente 2, 3 axial gegeneinander zu verspannen.

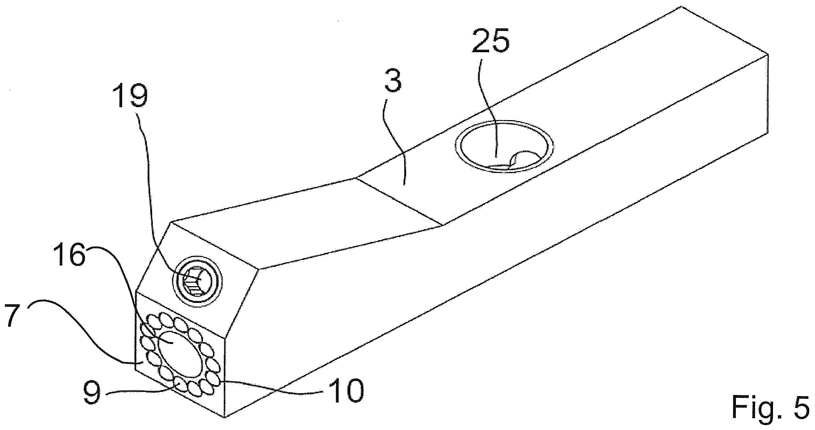

Sollen die beiden Kupplungselemente 2, 3, ausgehend von dem in den Figuren 5 und 6 dargestellten getrennten Zustand, koaxial drehfest miteinander gekuppelt werden, so sind die beiden Kupplungselemente 2, 3 zunächst derart zu positionieren, dass die beiden Stirnflächen 6, 7 zueinander gerichtet sind. Der Vorsprung 15 wird dann in die Bohrung 16 eingebracht, bis die Formschlusselemente 8 der beiden Kupplungselemente 2, 3 miteinander in Eingriff kommen. Dadurch werden die beiden Kupplungselemente 2, 3 relativ zueinander eindeutig und absolut spielfrei positioniert. Durch das Einschrauben der Spannschraube 19 in die Gewindebohrung 28 gelangt die Stirnfläche des Schafts 30 in Anlage an die Nutwandung 27 der in dem Vorsprung 15 ausgebildeten Nut 26. Durch die axiale Kraftkomponente, welche von der Spannschraube 19 auf die Nutwandung 27 ausgeübt wird, werden die beiden Kupplungselemente 2, 3 axial gegeneinander verspannt.

Die in den Figuren 1 und 2 dargestellten Ausführungsformen werden in gleicher Weise gekuppelt, jedoch werden anstelle der Spannschraube 19, welche gegen die Nutwandung 27 drückt, die beiden Kupplungselemente 2, 3 miteinander verschraubt. Bei der in der Figur 1 dargestellten Ausführungsform wird dazu die Überwurfmutter 11 verwendet, bei der in der Figur 2 dargestellten Ausführungsform die Spannschraube 19.

Eine derartige Verbindung über miteinander in Eingriff stehende Formschlusselemente 8 der beiden Kupplungselemente 2, 3 ermöglicht durch die punktförmige Auflage der kugelförmigen Oberflächen der Formschlusselemente 8 aneinander eine spielfreie Drehmomentübertragung bei gleichzeitig präziser Zentrierung der Kupplungselemente 2, 3 zueinander.

### Bezugszeichenliste

- 1: Kupplungsanordnung
- 2: Kupplungselement
- 3: Kupplungselement
- 4: Aufnahme
- 5: Durchgangsbohrung
- 6: Stirnfläche
- 7: Stirnfläche
- 8: Formschlusselement
- 9: Kugel
- 10: Ausnehmung
- 11: Überwurfmutter
- 12: Innengewinde
- 13: Außengewinde
- 14: Absatz
- 15: Vorsprung
- 16: Bohrung
- 17: Dichtring
- 18: ringförmig umlaufende Nut
- 19: Spannschraube
- 20: Gewindebohrung
- 21: Schraubenkopf
- 22: Anlagefläche
- 23: Anzugzapfen
- 24: zentrale Durchgangsbohrung
- 25: Gewindebohrung
- 26: Nut
- 27: Nutwandung
- 28: Gewindebohrung
- 29: Gewindeabschnitt
- 30: Schaft
- X1: Längsachse
- X2: Längsachse

## Patentansprüche

1. Kupplungsanordnung (1) mit
zwei Kupplungselementen (2, 3), welche jeweils eine Längsachse (X1, X2) definieren, und
Spannmitteln zum axialen Verspannen der Kupplungselemente (2, 3) gegeneinander,
wobei an zueinander weisenden Stirnflächen (6, 7) der Kupplungselemente (2, 3) jeweils eine Mehrzahl von Formschlusselementen (8) vorgesehen sind, welche von der jeweiligen Stirnfläche (6, 7) vorragen und jeweils ringförmig entlang eines Teilkreises um die Längsachse (X1, X2) des jeweiligen Kupplungselements (2, 3) angeordnet sind, so dass die Formschlusselemente (8) eines Kupplungselements (2, 3) in Umfangsrichtung zwischen den Formschlusselementen (8) des anderen Kupplungselements (2, 3) in Eingriff bringbar sind, um die beiden Kupplungselelemente (2, 3) koaxial drehfest miteinander zu kuppeln, wobei die Formschlusselemente (8) eine einem Teilabschnitt einer Kugel entsprechende Kontur aufweisen, **dadurch gekennzeichnet, dass** ein Kupplungselement (2) einen sich in Längsrichtung erstreckenden Vorsprung (15) aufweist, welcher in eine korrespondierende Öffnung, insbesondere eine Bohrung (16) des anderen Kupplungselements einbringbar ist, wobei in dem Vorsprung (15) eine sich quer zur Längsrichtung erstreckende Nut (26), insbesondere mit einem V-förmigen Querschnitt, ausgebildet ist und das andere Kupplungselement (3) eine schräg zur Längsachse (X2) verlaufende Gewindebohrung (28) für eine Spannschraube (12) aufweist, wobei die Gewindebohrung (28) und die Nut (26) derart ausgebildet sind, dass eine in die Gewindebohrung (28) eingeschraubte Spannschraube (19) mit einer Nutwandung (27) in Eingriff bringbar ist, um die beiden Kupplungsteile axial gegeneinander zu verspannen.

2. Kupplungsanordnung (1) nach Anspruch 1, **dadurch gekennzeichnet, dass** die Formschlusselemente (8) jedes Kupplungselements (2, 3) gleichmäßig in Umfangsrichtung entlang des jeweiligen Teilkreises verteilt angeordnet sind und/oder dass die zwischen den Formschlusselementen (8) mindestens eines Kupplungselements (2, 3) gebildeten Lücken kleiner sind als die Bereiche, welche durch die Formschlusselemente (8) ausgefüllt werden.

3. Kupplungsanordnung (1) nach einem der vorherigen Ansprüche, **dadurch gekennzeichnet, dass** die Teilkreise der beiden Kupplungselemente (2, 3) den gleichen Durchmesser aufweisen.

4. Kupplungsanordnung (1) nach Anspruch 1 oder 2, **dadurch gekennzeichnet, dass** die Teilkreise der beiden Kupplungselemente (2, 3) unterschiedliche Durchmesser aufweisen.

5. Kupplungsanordnung (1) nach einem der vorherigen Ansprüche, **dadurch gekennzeichnet, dass** wenigstens ein Kupplungselement (2, 3) mindestens 6, bevorzugt mindestens 10 und höchstens 28, bevorzugt 20 Formschlusselemente (8) aufweist.

6. Kupplungsanordnung (1) nach einem der vorherigen Ansprüche, **dadurch gekennzeichnet, dass** an beiden Kupplungselementen (2, 3) jeweils die gleiche Anzahl an Formschlusselementen (8) vorgesehen sind und/oder dass die kugelförmige Kontur der Formschlusselemente (8) der beiden Kupplungselemente (2, 3) den gleichen Durchmesser aufweist.

7. Kupplungsanordnung (1) nach einem der vorherigen Ansprüche, **dadurch gekennzeichnet, dass** mindestens ein Kupplungselement und die diesem zugeordneten Formschlusselemente (8) einteilig ausgebildet sind.

8. Kupplungsanordnung (1) nach einem der Ansprüche 1 bis 6, **dadurch gekennzeichnet, dass** die Formschlusselemente (8) von mindestens einem Kupplungselement (2, 3) durch Kugeln (9) gebildet werden, welche in entsprechenden, in der Stirnfläche (6, 7) ausgebildeten Ausnehmungen (10) angeordnet sind und partiell von der Stirnfläche (6, 7) vorragen, wobei bevorzugt Sicherungsmittel an dem jeweiligen Kupplungselement (2, 3) vorgesehen sind, um ein Herausfallen der Kugeln (9) aus den Ausnehmungen (10) zu vermeiden wobei insbesondere die Kugeln (9) um mindestens 10 %, bevorzugt um mindestens 20 %, und höchstens um 40%, bevorzugt höchstens um 30% ihres Durchmessers von der Stirnfläche (6, 7) vorragen.

9. Kupplungsanordnung (1) nach Anspruch 8, **dadurch gekennzeichnet, dass** die Kugeln (9) aus einem metallischen Werkstoff, insbesondere einem Wälzlagerstahl oder einem Hartmetall, oder aus einem keramischen Werkstoff oder aus Rubin oder Saphir bestehen.

10. Kupplungsanordnung (1) nach einem der vorherigen Ansprüche, **dadurch gekennzeichnet, dass** Dichtmittel vorgesehen sind, um den Vorsprung (15) des einen Kupplungselements (2) gegen die korrespondierende Öffnung des anderen Kupplungselements (3) abzudichten, die insbesondere einen Dichtring (17) umfassen, welcher in einer ringförmig umlaufenden Nut (18) eines Kupplungselements (3) angeordnet ist.

11. Kupplungsanordnung (1) nach einem der vorhergehenden Ansprüche, **dadurch gekennzeichnet, dass** die Gewindebohrung (28) in einem Winkel von mindestens 20° und höchstens 40 °, bevorzugt von genau 30° zur Längsachse (X2) des betreffenden Kupplungselements geneigt ist.

12. Kupplungsanordnung (1) nach einem der vorherigen Ansprüche, **dadurch gekennzeichnet, dass** mindestens ein Kupplungselement (2, 3) eine zentrale Durchgangsbohrung (5) aufweist.

13. Kupplungsanordnung (1) nach einem der vorherigen Ansprüche, **dadurch gekennzeichnet, dass** eines der beiden Kupplungselemente (2) als Werkzeughalter ausgebildet ist, wobei insbesondere das als Werkzeughalter ausgebildete Kupplungselement (2) in dem Endbereich, welcher der mit den Formschlusselementen (8) versehenen Stirnfläche (6) gegenüberliegt, eine Aufnahme (4) für ein Werkzeug, insbesondere für einen Werkzeugschaft aufweist oder wobei inbesondere das als Werkzeughalter ausgebildete Kupplungselement (2) Aufnahmemittel für ein Werkzeug, insbesondere für eine Schneidplatte, bevorzugt für eine Wendeschneidplatte aufweist.

14. Verfahren zum drehfesten Kuppeln zweier Kupplungselemente (2, 3), umfassend die folgenden Schritte:
- Bereitstellen einer Kupplungsanordnung (1) nach einem der Ansprüche 1 bis 13;
- Positionieren der beiden Kupplungselemente (2, 3) derart, dass die beiden Stirnflächen (6, 7), an welchen die Formschlusselemente (8) vorgesehen sind, zueinander gerichtet sind;
- In Eingriff Bringen der an den beiden Kupplungselementen (2, 3) vorgesehenen Formschlusselemente (8) miteinander;
- Axiales Verspannen der beiden Kupplungselemente (2, 3) gegeneinander.

## Claims

1. Coupling arrangement (1) with
two coupling elements (2, 3), each of which defines a longitudinal axis (X1, X2), and
clamping means for axially clamping the coupling elements (2, 3) against each other,
wherein a plurality of positive locking elements (8) are provided on end faces (6, 7) of the coupling elements (2, 3), facing to each other which project from the respective end face (6, 7) and are each arranged annularly along a pitch circle around the longitudinal axis (X1, X2) of the respective coupling element (2, 3), so that the positive-locking elements (8) of one coupling element (2, 3) can be brought into engagement in the circumferential direction between the positive-locking elements (8) of the other coupling element (2, 3) in order to couple the two coupling elements (2, 3) to one another coaxially in a rotationally fixed manner, the positive-locking elements (8) having a contour corresponding to a partial section of a ball, **characterised in that in that** one coupling element (2) has a projection (15) which extends in the longitudinal direction and can be introduced into a corresponding opening, in particular a bore (16), of the other coupling element, a groove (26) extending transversely to the longitudinal direction, in particular with a V-shaped cross-section, being formed in the projection (15), and the other coupling element (2) having a cross-section which corresponds to that of a ball, and the other coupling element (3) has a threaded bore (28) for a clamping screw (12) extending obliquely to the longitudinal axis (X2), wherein the threaded bore (28) and the groove (26) are designed in such a way that a clamping screw (19) screwed into the threaded bore (28) can be brought into engagement with a groove wall (27) in order to clamp the two coupling parts axially against one another.

2. Coupling arrangement (1) according to claim 1, **characterised in that** the positive-locking elements (8) of each coupling element (2, 3) are distributed uniformly in the circumferential direction along the respective pitch circle and/or **in that** the gaps formed between the positive-locking elements (8) of at least one coupling element (2, 3) are smaller than the areas which are filled by the positive-locking elements (8).

3. Coupling arrangement (1) according to one of the preceding claims, **characterised in that** the pitch circles of the two coupling elements (2, 3) have the same diameter.

4. Clutch arrangement (1) according to claim 1 or 2, **characterised in that** the pitch circles of the two clutch elements (2, 3) have different diameters.

5. Coupling arrangement (1) according to one of the preceding claims, **characterised in that** at least one coupling element (2, 3) has at least 6, preferably at least 10 and at most 28, preferably 20 positive-locking elements (8).

6. Coupling arrangement (1) according to one of the preceding claims, **characterised in that** the same number of positive-locking elements (8) are provided on each of the two coupling elements (2, 3) and/or **in that** the spherical contour of the positive-locking elements (8) of the two coupling elements (2, 3) has the same diameter.

7. Coupling arrangement (1) according to one of the preceding claims, **characterised in that** at least one coupling element and the positive-locking elements (8) associated therewith are formed in one piece.

8. Coupling arrangement (1) according to one of claims 1 to 6, **characterised in that** the positive locking elements (8) of at least one coupling element (2, 3) are formed by balls (9) which are arranged in corresponding recesses (10) formed in the end face (6, 7) and project partially from the end face (6, 7), wherein preferably securing means are provided on the respective coupling element (2, 3) in order to prevent the balls (9) from falling out of the recesses (10), wherein in particular the balls (9) project from the end face (6, 7) by at least 10%, preferably by at least 20%, and at most by 40%, preferably at most by 30% of their diameter.

9. Coupling arrangement (1) according to claim 8, **characterised in that** the balls (9) consist of a metallic material, in particular a rolling bearing steel or a hard metal, or of a ceramic material or of ruby or sapphire.

10. Coupling arrangement (1) according to one of the preceding claims, **characterised in that** sealing means are provided in order to seal the projection (15) of one coupling element (2) against the corresponding opening of the other coupling element (3), which sealing means comprise in particular a sealing ring (17) which is arranged in an annular circumferential groove (18) of a coupling element (3).

11. Coupling arrangement (1) according to one of the preceding claims, **characterised in that** the threaded bore (28) is inclined at an angle of at least 20° and at most 40°, preferably of exactly 30° to the longitudinal axis (X2) of the relevant coupling element.

12. Coupling arrangement (1) according to one of the preceding claims, **characterised in that** at least one coupling element (2, 3) has a central through-hole (5).

13. Coupling arrangement (1) according to one of the preceding claims, **characterised in that** one of the two coupling elements (2) is designed as a tool holder, wherein in particular the coupling element (2) designed as a tool holder has a receptacle (4) for a tool, in particular for a tool shank, in the end region which is opposite the end face (6) provided with the positive-locking elements (8), or wherein in particular the coupling element (2) designed as a tool holder has receiving means for a tool, in particular for a cutting insert, preferably for an indexable insert.

14. A method of non-rotatably coupling two coupling elements (2, 3), comprising the following steps:
- Providing a coupling arrangement (1) according to any one of claims 1 to 13;
- Positioning the two coupling elements (2, 3) in such a way that the two end faces (6, 7), on which the positive locking elements (8) are provided, are orientated towards each other;
- Engaging the positive locking elements (8) provided on the two coupling elements (2, 3) with each other;
- Axial clamping of the two coupling elements (2, 3) against each other.

## Revendications

1. Ensemble d'accouplement (1) avec
deux éléments d'accouplement (2, 3), qui définissent chacun un axe longitudinal (X1, X2), et
des moyens de serrage pour serrer axialement les éléments d'accouplement (2, 3) l'un contre l'autre,
une pluralité d'éléments à engagement positif (8) étant respectivement prévus sur des surfaces frontales (6, 7) tournées l'une vers l'autre des éléments d'accouplement (2, 3), lesquels font saillie de la surface frontale respective (6, 7) et sont respectivement disposés en forme d'anneau le long d'un cercle partiel autour de l'axe longitudinal (X1, X2) de l'élément d'accouplement respectif (2, 3), de sorte que les éléments à engagement positif (8) d'un élément d'accouplement (2, 3) peuvent être amenés en prise dans le sens périphérique entre les éléments à engagement positif (8) de l'autre élément d'accouplement (2, 3), afin d'accoupler les deux éléments d'accouplement (2, 3) de manière coaxiale et solidaire en rotation, les éléments à engagement positif (8) présentant un contour correspondant à une section partielle d'une sphère, caractérisé, qu'un élément d'accouplement (2) présente une saillie (15) s'étendant dans la direction longitudinale, qui peut être introduite dans une ouverture correspondante, en particulier un alésage (16) de l'autre élément d'accouplement, une rainure (26) s'étendant dans la saillie (15) transversalement à la direction longitudinale, en particulier avec une section transversale en forme de V, et l'autre élément d'accouplement (3) présente un alésage fileté (28) s'étendant obliquement par rapport à l'axe longitudinal (X2) pour une vis de serrage (12), l'alésage fileté (28) et la rainure (26) étant réalisés de telle sorte qu'une vis de serrage (19) vissée dans l'alésage fileté (28) peut être amenée en prise avec une paroi de rainure (27) afin de serrer axialement les deux pièces d'accouplement l'une contre l'autre.

2. Agencement d'accouplement (1) selon la revendication 1, **caractérisé en ce que** les éléments à engagement positif (8) de chaque élément d'accouplement (2, 3) sont répartis uniformément dans la direction circonférentielle le long du cercle primitif respectif et/ou **en ce que** les espaces formés entre les éléments à engagement positif (8) d'au moins un élément d'accouplement (2, 3) sont plus petits que les zones qui sont remplies par les éléments à engagement positif (8).

3. ensemble d'accouplement (1) selon l'une des revendications précédentes, **caractérisé en ce que** les cercles primitifs des deux éléments d'accouplement (2, 3) présentent le même diamètre.

4. ensemble d'accouplement (1) selon la revendication 1 ou 2, **caractérisé en ce que** les cercles primitifs des deux éléments d'accouplement (2, 3) présentent des diamètres différents.

5. ensemble d'accouplement (1) selon l'une des revendications précédentes, **caractérisé en ce qu'**au moins un élément d'accouplement (2, 3) comporte au moins 6, de préférence au moins 10 et au maximum 28, de préférence 20 éléments de liaison par la forme (8).

6. agencement d'accouplement (1) selon l'une des revendications précédentes, **caractérisé en ce que** le même nombre d'éléments à engagement positif (8) est prévu sur chacun des deux éléments d'accouplement (2, 3) et/ou **en ce que** le contour sphérique des éléments à engagement positif (8) des deux éléments d'accouplement (2, 3) présente le même diamètre.

7. Ensemble d'accouplement (1) selon l'une des revendications précédentes, **caractérisé en ce qu'**au moins un élément d'accouplement et les éléments à engagement positif (8) qui lui sont associés sont formés d'une seule pièce.

8. Agencement d'accouplement (1) selon l'une des revendications 1 à 6, **caractérisé en ce que** les éléments à engagement positif (8) d'au moins un élément d'accouplement (2, 3) sont formés par des billes (9) qui sont disposées dans des évidements (10) correspondants formés dans la surface frontale (6, 7) et font partiellement saillie de la surface frontale (6, 7), de préférence, des moyens de sécurité sont prévus sur l'élément d'accouplement respectif (2, 3) pour éviter que les billes (9) ne tombent hors des évidements (10), les billes (9) dépassant en particulier d'au moins 10 %, de préférence d'au moins 20 %, et au maximum de 40 %, de préférence au maximum de 30 % de leur diamètre, de la surface frontale (6, 7).

9. ensemble d'accouplement (1) selon la revendication 8, **caractérisé en ce que** les billes (9) sont constituées d'un matériau métallique, notamment d'un acier à roulement ou d'un métal dur, ou d'un matériau céramique ou de rubis ou de saphir.

10. Ensemble d'accouplement (1) selon l'une des revendications précédentes, **caractérisé en ce que** des moyens d'étanchéité sont prévus pour rendre étanche la saillie (15) d'un élément d'accouplement (2) par rapport à l'ouverture correspondante de l'autre élément d'accouplement (3), qui comprennent en particulier une bague d'étanchéité (17) qui est disposée dans une rainure périphérique annulaire (18) d'un élément d'accouplement (3).

11. Ensemble d'accouplement (1) selon l'une des revendications précédentes, **caractérisé en ce que** le trou taraudé (28) est incliné d'un angle d'au moins 20° et d'au plus 40 °, de préférence d'exactement 30°, par rapport à l'axe longitudinal (X2) de l'élément d'accouplement concerné.

12. Ensemble d'accouplement (1) selon l'une des revendications précédentes, **caractérisé en ce qu'**au moins un élément d'accouplement (2, 3) présente un trou central traversant (5).

13. Agencement d'accouplement (1) selon l'une des revendications précédentes, **caractérisé en ce que** l'un des deux éléments d'accouplement (2) est réalisé sous la forme d'un porte-outil, l'élément d'accouplement (2) réalisé sous la forme d'un porte-outil présentant en particulier, dans la zone d'extrémité qui est opposée à la face frontale (6) pourvue des éléments à'engagement positif (8), un logement (4) pour un outil, en particulier pour une tige d'outil, ou l'élément d'accouplement (2) réalisé sous la forme d'un porte-outil présentant en particulier des moyens de réception pour un outil, en particulier pour une plaquette de coupe, de préférence pour une plaquette de coupe réversible.

14. Procédé d'accouplement en rotation de deux éléments d'accouplement (2, 3), comprenant les étapes suivantes :
- Fournir un ensemble de couplage (1) selon l'une quelconque des revendications 1 à 13;
- positionner les deux éléments d'accouplement (2, 3) de telle sorte que les deux surfaces frontales (6, 7), sur lesquelles sont prévus les éléments à engagement positif (8), soient orientées l'une vers l'autre;
- mettre en prise l'un avec l'autre les éléments à engagement positif (8) prévus sur les deux éléments d'accouplement (2, 3);
- Serrage axial des deux éléments d'accouplement (2, 3) l'un contre l'autre.
